# EUROPEAN PATENT APPLICATION

(11) **EP 1 981 271 A1**
(43) Date of publication of application: **15.10.2008**
(21) Application number: 07007427.3
(22) Date of filing: 11.04.2007
(51) Int. Cl.: H04N 5/76, G06Q 30/00

(54) **Methods for protecting an additional content, which is insertable into at least one digital content**

(71) Applicant: Vodafone Holding GmbH, 40213 Düsseldorf (DE)
(72) Inventor: van de Bergh, Marco, 6221 JE Maastricht (NL); Schuster, Wolfgang, 81377 München (DE); Barry, Peter, Alamo, CA 94507 (US)
(74) Representative: Müller, Thomas

(57) **Abstract**

The invention relates to three methods for protecting an additional content, which is insertable into at least one digital content, whereas the at least one digital content is developed for a visual and/or acoustic display at at least one electronic mobile terminal. The method steps are being done by intermediation means, by a portal in a telecommunication network and by an electronic mobile terminal.

## Description

The invention relates to methods for protecting an additional content, which is insertable into at least one digital content, whereas the at least one digital content is developed for a visual and/or acoustic display at at least one electronic mobile terminal.

Inserting additional content into digital content, in particular mobile advertising, is gaining traction in the marketplace. The increasing availability of multimedia content is opening a very large opportunity for sophisticated forms of mobile advertising. As content that already incorporates advertising, i.e. like live TV programming, makes its way as well to mobile handsets. Brands and entertainment content provider are beginning to see the value of presenting full multimedia advertisements with programs.

Therefore providers across the value chain are developing their strategies and positioning themselves in this market space. Operators are either testing various forms of advertising with 3G services or are allowing advertisements to be served on their portals. A number of multimedia companies are launching advertising within their multimedia offering.

The key advantage of a mobile electronic device, like a mobile phone, is that it is a very personal device that a lot of people carry with them 24 hours a day. Therefore one aim of owner of additional content or advertisers is to present very targeted and time-sensitive information that is of interest to the costumer. The target group can be reached 24 hours a day, a lot more efficient and a lot more intensive. It is possible to reach a customer through a medium that puts information about products and services directly to the customers' hands. The click rates of mobile advertisements are a lot higher than the click rates of internet banner advertisements, because it is possible to reach the customer more directly. Mobile advertising enables an advertiser to reach a highly desirable demographic target group. Mobile advertising enables an advertiser to easily and cost-effectively advertise in an uncluttered environment, reach a certain audience and deliver personalized messages.

To further stimulate market development, companies are offering automated mobile advertisement insertion and inventory management solutions. Automating the mobile advertising marketplace implies a high degree of standardized interconnects between companies in the mobile advertising place.

Digital content can be for example mobile software games, mobile videos or MP3 songs. To provide mobile advertising in digital content there is a very complex value chain. That means there are a lot of relationships between various actors in the value chain. First of all there are the advertisers. The advertisers are companies wanting to communicate their brands or products to a large customer base. Then, there are the content producers, which are responsible for producing the digital content. Between the advertisers and the content producers are normally two more actors. At first, there are the advertisement agencies. The advertisement agencies are contracted by the advertisers to produce an advertising campaign on their behalf. Typically these advertisement agencies are responsible for creative production, the actual creation of the advertisement and the media planning, like selecting the target groups for the advertisement, the time planning of the release of the advertisement or selecting the medium, i.e. newspapers, TV, mobile devices, etc.. The second actor between the advertisers and the content producers are the advertisement insertion intermediaries. The advertisement insertion intermediaries are managing contracts between mobile operators and/or mobile content publishers on one side and advertisers and/or advertisement agencies on the other side. With these advertisement insertion intermediaries two distinct roles can be identified. The mobile advertising inventory, which is a party owning an inventory of mobile advertising content ready for insertion in digital content. Further the insertion technology provider, which is a party having developed special technology capabilities to insert advertisements in digital content channels, like SMS or mobile games. The content producers should give its consent to the advertisement insertion intermediary to insert advertisements in its content. This relationship is based on industry ethics and the necessity to avoid copyright claims. The relationship between the advertisement agencies and the advertisement insertion intermediary is a contractual relationship quantifying the delivery of advertisements over a certain channel for a certain price. The operator or content publisher and the advertisement insertion intermediary have a contractual relationship which allows the advertisement insertion intermediary to insert advertisements in content on the publisher sides. Usually this also contains some form of revenue share agreement for the advertising value of the content. The relationship between the content producer and the content publisher, i.e. an operator, is a contractual relationship, which allows the content publisher to publish the content publisher's content on its sides. Usually this also contains some form of revenue share agreement for the value of the content. That means the content producer does often not care whether the publisher get the money from its customers or from the advertiser.

The current mobile advertising market is characterized by the many contracts between the actors of the mobile advertising value chain described before. There are many contracts necessary to deliver a national mobile advertising campaign. In this sense, the mobile advertising value chain is more complex than other forms of advertising. The advertisement agencies need to establish contracts with multiple, around 3.5, content publishers, typically the mobile operators of a specific country, in order to be able to address a national audience. This set up of ad hoc contracts with operators is currently a time consuming activity. The content publisher needs to have a constant supply of advertisements to keep their ad-sponsored content channels operational. The operators have to contact multiple content producers to get their consent for inserting advertisements in their content.

This difficulties and market inefficiencies justifies the existence of the advertisement insertion intermediary. The advertisement insertion intermediaries manage for example a number of contracts with national telecom operators or other content publishers for the advertisement agencies and advertisers and therefore make ad hoc campaigns easier to plan and implement on a national scale. The advertisement insertion intermediaries manage a number of contracts with advertisement agencies and advertisers for mobile telecom operators or mobile content publishers and therefore guarantee a constant flow of advertisements for their advertisement-sponsored content channels. Further, the advertisement insertion intermediaries manage a portfolio of technology solutions for inserting advertisement on behalf of operators/content publishers and advertisement agencies and can therefore offer a large range of technical advertising solutions, like SMS, video insertion, game insertion, etc..

But it is disadvantageous that after inserting additional content, in particular advertisement, into the digital content, it is still possible for malicious user to strip the additional content, in particular the advertisement, from the digital content.

The problem to be solved by the present invention is thus to overcome this disadvantage. That means the aim of the invention is to provide methods for protecting an additional content, which is insertable into at least one digital content, from been stripped from the digital content. A method for protecting the inserted additional content is required.

The invention is based on the finding that the problem can be solved by three methods for protecting an additional content, which is insertable into at least one digital content, whereas the at least one digital content is developed for a visual and/or acoustic display at at least one electronic mobile terminal.

The problem is solved by a method according to independent claim 1, by a method according to independent claim 4 and by a method according to independent claim 7. Further features and advantageous embodiments will become apparent from the dependent claims and the description. Advantages and features described with respect to the method according to independent claim 1 can also apply to the methods according to the independent claims 4 and 7 accordingly and vice versa.

According to a first aspect, the present invention relates to a method for protecting an additional content, which is insertable into at least one digital content, whereas the at least one digital content is developed for a visual and/or acoustic display at at least one electronic mobile terminal, whereby following steps are being performed by an intermediation means:
a) Inserting the additional content into the at least one digital content,
b) Codifying of the inserted additional content with a codifying method,
c) Transmitting the at least one digital content with the codified additional content to the at least one electronical mobile terminal.

This method for protecting an additional content, which is insertable into at least one digital content, whereas the at least one digital content is developed for a visual and/or acoustic display at at least one electronic mobile terminal, makes sure that the inserted additional content, in particular the advertisement, is protected from being stripped out of the digital content by a malicious user of the electronic mobile terminal.

The intermediation means can be assigned to an advertisement insertion intermediary or to an advertisement serving intermediary, respectively. The advertisement serving intermediary, the advertiser or a advertising agency have the possibility to make sure that their investment in form of an additional content, in particular the advertisement, is not replaced from the digital content, in which the additional content, in particular the advertisement, has been inserted.

In a first step the intermediation means inserts the additional content into the at least one digital content. The intermediation means possesses both the additional content and the digital content. Therefore the intermediation means can have storage means for storing or buffering the additional content and the digital content. In a second step the intermediation means codifies the inserted additional content with a codifying method. Codifying means in the light of the invention, that the additional content is been ciphered or encrypted and is been linked to the digital content, that it is not possible for a malicious user to strip the additional content from the digital content. After codifying the inserted additional content, the intermediation means transmits the at least one digital content with the codified additional content to the at least one electronical mobile terminal. Therefore, an actor in the value chain, in particular the user of the at least one electronical mobile terminal, can not strip the additional content, in particular the advertisement, from the digital content, because the additional content is not accessible for the actor/user. The additional content is securely linked with the digital content.

The additional content is shown on a display and/or is announced by loudspeaker means of the mobile electronic terminal, like a mobile telephone, a PDA or the like, which is used by the user. The additional content can be seen or can be heard by the user of the mobile electronic terminal.

The method protects the inserted additional content from deletion, time shifting and/or place shifting.

The intermediation means have advantageously an air interface for transmitting the additional content together with the at least one digital content to the at least one electronical mobile terminal.

Preferred is further a method, whereby the insertion of the additional content into the at least one digital content is done by software means assigned to the intermediation means.

According to a second aspect of the invention, the problem is solved by a method for protecting an additional content, which is insertable into at least one digital content, whereas the at least one digital content is developed for a visual and/or acoustic display at at least one electronic mobile terminal, whereby following steps are being performed by a portal in a telecommunication network:
a) Receiving the at least one digital content and the additional content by receiving means,
b) Inserting the additional content into the at least one digital content,
c) Codifying of the inserted additional content with a codifying method,
d) Transmitting the at least one digital content with the codified additional content to the at least one electronical mobile terminal.

In contrast to the method according to the first aspect of the invention the protection of the additional content is done by a portal in a telecommunication network instead by intermediation means. The portal is normally assigned to a content publisher, i.e. to the operator of the telecommunication network.

In a first step the portal receives the at least one digital content and the additional content. The portal has receiving means to do this. The portal can have storage means for storing or buffering the additional content and the digital content. After receiving the at least one digital content and the additional content the portal inserts the additional content into the at least one digital content. The portal links the additional content with the at least one digital content. In a further step the portal codifies the inserted additional content with a codifying method. Codifying means in the light of the invention, that the additional content is been ciphered or encrypted, that it is not possible for a malicious user to strip the additional content from the digital content. After codifying the inserted additional content the portal transmits the at least one digital content with the codified additional content to the at least one electronical mobile terminal. Therefore, an user of the at least one electronical mobile terminal can not strip the additional content, in particular the advertisement, from the digital content, because the additional content is not accessible for the user. The additional content is securely linked with the digital content.

Preferred is a method, whereby the additional content is transmitted to the least one electronical mobile terminal together with the at least one digital content by an air interface.

Further advantageous is a method, whereby the insertion of the additional content into the at least one digital content is done by software means, which are implemented at server means assigned to the portal.

The portal makes sure that the investment in form of an additional content, in particular in form of advertisement, of an advertiser is not replaced from the digital content, in which the additional content, in particular the advertisement, has been inserted. An user of the at least one electronical mobile terminal can not strip the additional content, in particular the advertisement, from the digital content, because the additional content is not accessible for the user. The additional content is securely linked with the digital content.

According to a third aspect of the invention, the problem is solved by a method for protecting an additional content, which is insertable into at least one digital content, whereas the at least one digital content is developed for a visual and/or acoustic display at at least one electronic mobile terminal, whereby following steps are being performed by a electronical mobile terminal:
a) Receiving the at least one digital content and the additional content by receiving means, which are assigned to the electronical mobile terminal, whereby the at least one digital content and the additional content are been send to the electronical mobile terminal from intermediation means for digital contents or from server means of a portal, which is assigned to a telecommunication network.
b) Receiving of a codifying software from the intermediation means for digital contents or the server means of the portal,
c) Codifying of the additional content with a codifying method of the codifying software.

In contrast to the method according to the first and second aspect of the invention the protection of the additional content can be done by an electronical mobile terminal itself.

In a first step, the electronical mobile terminal receives the at least one digital content and the additional content by receiving means, which are assigned to the electronical mobile terminal, whereby the at least one digital content and the additional content are been sent to the electronical mobile terminal from intermediation means for digital contents or from server means of a portal, which is assigned to a telecommunication network. The intermediation means can be assigned to an advertisement insertion intermediary or to an advertisement serving intermediary, respectively. After receiving the at least one digital content and the additional content the electronical mobile terminal receives a codifying software from the intermediation means for digital contents or the server means of the portal. After receiving the codifying software from the intermediation means for digital contents or the server means of the portal the electronical mobile terminal codifies the additional content with a codifying method of the codifying software. It is possible that the electronical mobile terminal already possesses the codifying software before receiving the at least one digital content and the additional content by the receiving means. In this case the second step has been done before the first step.

An user of the at least one electronical mobile terminal can not strip the additional content, in particular the advertisement, from the digital content, because the additional content is not accessible for the user. The additional content is securely linked with the digital content. This is advantageously being done by the electronical mobile terminal itself.

Preferred is a method, whereby the at least one electronical mobile terminal inserts the additional content into the at least one digital content before the codification. That makes sure that the additional content, in particular the advertisement, is securely linked with the digital content. The additional content comprises advantageously advertisement. The at least one digital content is advantageously a text, a graphical game, a video and/or a song. Other kinds of digital content are possible, as well.

In a further preferred method step the codification of the additional content is done by assigning digital rights. Assigning of digital rights makes it possible for the advertiser or publisher und therefore for the copyright owner to control the access and the usage of the digital content.

All three methods protect the additional content from been stripped from the digital content. The methods protect the inserted additional content from being deleted, from being time shifted and/or from being place shifted.

The mobile electronic device can be a mobile phone, a small portable computer, a smart phone, a PDA (PDA = personal digital assistant), or the like.

## Claims

1. Method for protecting an additional content, which is insertable into at least one digital content, whereas the at least one digital content is developed for a visual and/or acoustic display at at least one electronic mobile terminal, **characterized by** following steps performed by an intermediation means:
d) Inserting the additional content into the at least one digital content,
e) Codifying of the inserted additional content with a codifying method,
f) Transmitting the at least one digital content with the codified additional content to the at least one electronical mobile terminal.

2. Method according to claim 1, **characterised in that** the additional content is transmitted to the least one electronical mobile terminal together with the at least one digital content by an air interface.

3. Method according to claim 1 or 2, **characterised in that** the insertion of the additional content into the at least one digital content is done by software means assigned to the intermediation means.

4. Method for protecting an additional content, which is insertable into at least one digital content, whereas the at least one digital content is developed for a visual and/or acoustic display at at least one electronic mobile terminal, **characterized by** following steps performed by a portal in a telecommunication network:
a) Receiving the at least one digital content and the additional content by receiving means,
b) Inserting the additional content into the at least one digital content,
c) Codifying of the inserted additional content with a codifying method,
d) Transmitting the at least one digital content with the codified additional content to the at least one electronical mobile terminal.

5. Method according to claim 4, **characterised in that** the additional content is transmitted to the least one electronical mobile terminal together with the at least one digital content by an air interface.

6. Method according to claim 4 or 5, **characterised in that** the insertion of the additional content into the at least one digital content is done by software means, which are implemented at server means assigned to the portal.

7. Method for protecting an additional content, which is insertable into at least one digital content, whereas the at least one digital content is developed for a visual and/or acoustic display at at least one electronic mobile terminal, **characterized by** following steps performed by a electronical mobile terminal:
a) Receiving the at least one digital content and the additional content by receiving means, which are assigned to the electronical mobile terminal, whereby the at least one digital content and the additional content are been send to the electronical mobile terminal from intermediation means for digital contents or from server means of a portal, which is assigned to a telecommunication network.
b) Receiving of a codifying software from the intermediation means for digital contents or the server means of the portal,
c) Codifying of the additional content with a codifying method of the codifying software.

8. Method according to claim 7, **characterised in that** the at least one electronical mobile terminal inserts the additional content into the at least one digital content before the codification.

9. Method according to one of the claims 1 to 8, **characterised in that** the additional content comprises advertisement.

10. Method according to one of the claims 1 to 9, **characterised in that** the at least one digital content is a text, a graphical game, a video and/or a song.

11. Method according to one of the claims 1 to 10 **characterised in that** the codification of the additional content is done by assigning digital rights.
